# FASCICULE DE BREVET EUROPEEN

(11) **EP 2 287 096 B1**
(45) Date de publication et mention de la délivrance du brevet: **02.10.2013**
(21) Numéro de dépôt: 10172721.2
(22) Date de dépôt: 13.08.2010
(51) Int. Cl.: B65G 65/23

(54) **Support basculant pour réservoir**
Kippgestell für Behälter
Tilting support for a tank

(30) Priorité: 21.08.2009 FR 0955743
(43) Date de publication de la demande: 23.02.2011
(73) Titulaire: Total Raffinage Marketing, 92800 Puteaux (FR)
(72) Inventeur: Gnemmi, Renaud, 44117, SAINT ANDRE DES EAUX (FR)
(74) Mandataire: Radault, Gabrielle

(56) Documents cités:
- FR-A1- 2 290 147
- FR-A1- 2 630 097
- FR-A1- 2 859 719
- GB-A- 220 816
- GB-A- 727 328
- GB-A- 763 346
- GB-A- 774 520
- GB-A- 2 203 719
- GB-A- 2 269 374
- GB-A- 2 271 550
- GB-A- 2 272 878
- GB-A- 2 285 431
- GB-A- 2 292 727
- GB-A- 2 296 701
- GB-A- 2 360 511

## Description

La présente invention concerne un dispositif conçu pour être disposé sous un réservoir, afin de permettre le basculement de ce réservoir, notamment au cours d'une opération de vidange.

En effet, de nombreuses applications industrielles nécessitent l'emploi de produits particuliers, notamment chimiques, disposés dans des capacités spécifiques généralement fixes, alimentées par des réservoirs, afin d'assurer en continu le bon fonctionnement d'une machine, ou, par exemple, d'un procédé de fabrication d'un produit. Dans ces applications, il peut être impératif de vidanger complètement le produit liquide du réservoir afin qu'il ne reste pas, ou très peu, de produit à l'intérieur de celui-ci avant de procéder à son remplacement par un autre réservoir, de préférence identique, rempli du même produit.

Plus particulièrement, le domaine d'utilisation du dispositif de la présente invention concerne les industries chimiques, et notamment pétrolières, qui utilisent des produits liquides particuliers stockés dans des Grands Récipients pour Vrac, aussi dénommés Grands Réservoirs pour Vrac, en abréviation GRV, pour alimenter, par l'intermédiaire de capacités spécifiques tampons, des procédés continus de fabrication des produits, tels par exemples la distillation des pétroles bruts, la viscoréduction de charges hydrocarbonées lourdes ou le craquage catalytique des distillats.

L'invention s'applique néanmoins à tout type de réservoir équipé d'un robinet de vidange localisé dans sa partie basse, contenant tout type de produits, et pour lequel il est souhaitable d'obtenir une vidange quasiment complète de ce réservoir.

Dans l'industrie pétrolière, les GRV, que l'on utilise sur les sites de production, peuvent contenir jusqu'à une tonne, voire davantage, de produit chimique pour alimenter des capacités fixes disposées généralement sous ces GRV. On peut compter jusqu'à plusieurs dizaines de produits chimiques différents, disposés dans autant de GRV et donc autant de capacités fixes, dans une raffinerie de pétrole.

Généralement ces GRV, qui sont équipés d'un robinet de vidange dans leur partie basse, ont une capacité intérieure d'environ mille litres, voire davantage. Les GRV peuvent être réalisés en matière plastique du type polyéthylène avec des armatures extérieures métalliques, ou bien encore en acier galvanisé, pour éviter la corrosion due aux produits contenus.

Pour une structure majoritairement en polyéthylène, les dimensions d'un GRV peuvent être de l'ordre de un mètre pour la largeur, un mètre pour la hauteur et encore un mètre pour la profondeur, la masse à vide étant généralement comprise entre cinquante et cent kilogrammes.

Une pompe, installée sur chacune des capacités fixes, expédie en continu, ou suivant la demande pour certaines applications, le produit chimique indispensable à la bonne marche du procédé de production.

Ainsi, les capacités doivent souvent être maintenues en charge du produit chimique correspondant, afin de garantir le bon fonctionnement des procédés.

Habituellement, le remplacement d'un GRV vide par un GRV plein est déclenché quand un opérateur du site, lors de ses tournées journalières d'inspections, constate de visu que le niveau du GRV atteint un seuil limite prédéfini.

En effet, un GRV disposé plan sur son support, ne se vide jamais totalement et contient toujours entre 5 et 10 % de produit restant dans ce GRV, soit entre environ 50 et 100 kg de ce produit, sans que ce dernier puisse s'écouler par le robinet de vidange.

Cette rétention de produit est essentiellement due à la configuration du GRV, et plus précisément à sa forme en partie basse, sa texture en polyéthylène, ainsi qu'à l'emplacement du robinet de vidange, voire éventuellement au fait que l'assise du GRV peut être non horizontale.

Il est alors nécessaire de traiter le produit restant dans le réservoir. Des opérations relativement délicates de transport et de recyclage du produit restant peuvent par exemple être menées par une société spécialisée, en particulier lorsque le produit chimique risque de s'avérer dangereux pour l'environnement.

Certains fournisseurs du produit chimique imposent ainsi que le GRV retourné contienne moins de 0, 1 % dudit produit, soit moins d'un litre ou moins d'un kilogramme.

Le coût annuel d'un tel traitement, y compris la dépollution, ainsi que la perte due aux produits restants inutilisables pour l'exploitant, peut être relativement élevé et atteindre par exemple plusieurs K€ par GRV.

Il devient donc intéressant, pour les aspects environnemental et économique, de pouvoir vider le plus complètement possible le contenu du GRV dans la capacité fixe.

De plus, il est souhaitable de minimiser les interventions des opérateurs.

Le document GB 2 271 550 décrit un dispositif, selon le préambule de la revendication 1, pour faire basculer des barriques lorsque ces dernières se vident.

Il est proposé un dispositif support d'un réservoir selon la revendication 1 comprenant un robinet de vidange dans sa partie basse. Le dispositif comprend au moins un élément fixe et un élément mobile, cet élément mobile étant apte à recevoir ce réservoir.

L'élément mobile est monté en rotation sur l'élément fixe de façon à être apte à pivoter autour d'un axe de rotation. Le dispositif est agencé pour recevoir le réservoir de sorte que le robinet soit disposé du même coté que l'axe de rotation.

Le dispositif comporte en outre au moins un moyen élastique apte à supporter au moins une partie du poids du réservoir et à appliquer une force de poussée de façon à faire pivoter l'élément mobile autour de l'axe de rotation lorsque le poids supporté passe en dessous d'un seuil du fait de l'écoulement du fluide hors du réservoir.

Ainsi, le pivotement de l'élément mobile entraîne le basculement du réservoir. Ce basculement est dirigé vers la face du réservoir contenant le robinet de vidange, habituellement disposé en partie basse de cette face. Du fait du basculement, le fluide restant est déplacé à proximité du robinet, permettant ainsi une vidange plus complète que dans l'art antérieur.

Un tel dispositif permet un vidage relativement complet d'un réservoir de type GRV par basculement du réservoir côté robinet de vidange. La quantité restante *in fine* à l'intérieur du GRV peut être relativement faible, par exemple inférieure à 1 litre de produit, ce qui permet un impact environnemental très positif car il n'y a plus ou peu de produits à retraiter.

Ce dispositif permet ainsi le basculement d'un réservoir, avantageusement de forme parallélépipédique, d'un angle de quelques degrés par rapport à sa base, quand la quantité de produit à l'intérieur du réservoir diminue et atteint un poids prédéfini.

Tant que le poids supporté est au-dessus du seuil, par exemple lorsque le réservoir est plein ou relativement plein, le moyen élastique est comprimé et l'élément mobile reste sensiblement horizontal. Lorsque le poids atteint une valeur inférieure à ce seuil, par exemple en fin de vidange, alors la force de poussée entraîne le basculement de l'élément mobile supportant le réservoir et donc le basculement du réservoir lui-même.

Ce seuil peut être choisi de sorte que le basculement ait lieu lorsque que la quantité de fluide restant dans le réservoir est relativement faible, par exemple lorsque le réservoir est rempli à 15%, 10%, 5% ou 2% de sa capacité.

Le seuil peut par exemple être déterminé de façon empirique, ou d'une autre façon, par exemple par des calculs théoriques.

Ainsi, le basculement est déclanché lorsque la quantité de produit restant dans le réservoir atteint un seuil, permettant ainsi d'éviter une intervention humaine pour commander ce basculement.

Le pivotement de l'élément mobile peut être effectué le long de l'un des côtés de l'élément fixe, mais l'invention n'est en rien limitée par cette caractéristique. On pourrait par exemple prévoir un élément fixe de forme rectangulaire et un élément mobile pivotant autour d'un axe de rotation non confondu avec l'un des côtés de ce rectangle, par exemple un axe de symétrie du rectangle. Il est alors préférable que l'élément fixe comporte des moyens de maintien du type rebord pour empêcher le glissement et la chute du réservoir lors du basculement.

L'élément fixe peut par exemple comprendre un plateau, mais l'invention n'est en rien limitée par le type d'élément fixe mis en oeuvre.

Le plateau du dispositif, avantageusement de forme carrée ou rectangulaire peut être fixé sur le sol, ou sur un support, ou encore sur une capacité fixe destinée à être alimentée par le GRV, ou autre.

On peut prévoir un réglage de la planéité du plateau. Ce réglage peut être obtenu par des moyens vis/écrou, par exemple des vis ou des tiges filetées disposées aux quatre coins du plateau, permettant un ajustement de la planéité dudit plateau.

Le plateau peut avantageusement posséder une interface de positionnement universelle pour une adaptation sur n'importe quel type de terrain.

Le plateau peut comporter à au moins un de ses angles une équerre ou un gousset, avantageusement percé d'au moins un trou oblong.

En particulier, le plateau peut comporter à chacun de ses angles une équerre ou un gousset sur lequel des trous oblongs sont disposés stratégiquement pour une plus grande possibilité de fixation par les vis ou tiges filetées et permettre, de plus, un renforcement de cette partie du dispositif.

Le dispositif et notamment le plateau support présentent avantageusement une résistance à la déformation relativement élevée. Le dispositif, notamment le plateau, peut, par exemple, être réalisé, en cornière de type L présentant par exemple des dimensions de 50 mm pour chacune des ailes et une épaisseur de 5 mm (en abréviation 50.50.5).

L'invention n'est bien entendu pas limitée aux cornières de types L, ni à ces dimensions.

Le métal constituant le dispositif peut être par exemple un acier galvanisé pour résister à la corrosion due à un milieu salin ou chimique.

L'invention n'est bien entendu pas limitée à l'emploi de l'acier galvanisé.

L'élément mobile peut comprendre un support mobile mais l'invention n'est en rien limitée par le type d'élément mobile mis en oeuvre.

Le support mobile est avantageusement de forme sensiblement complémentaire au plateau. Le support mobile peut être également fabriqué avec une cornière de type L (par exemple 50.50.5). En outre, le support mobile pourra être réalisé de façon à s'emboîter dans le plateau afin de minimiser la hauteur totale du dispositif.

A cette fin, le support peut présenter des dimensions moindres de quelques centimètres à celles du plateau afin d'assurer parfaitement l'emboîtement et afin d'éviter des risques de coincements des doigts des opérateurs lors des manipulations du dispositif, notamment lors de l'installation du dispositif.

Des barres ou un caillebotis peuvent être disposés sur le cadre de ce support mobile pour maintenir le GRV en position, ou plus exactement la palette qui peut être en bois ou en matière plastique, qui supporte le GRV.

Pour éviter le déplacement du GRV sur le support mobile, notamment quand celui-ci est incliné, on peut prévoir au moins un moyen de maintien du réservoir en translation. Par exemple des rebords ou angles de maintien peuvent être disposés aux quatre coins, en surépaisseur au dit support.

Le support mobile est lié au plateau fixe par un des côtés, par exemple par l'intermédiaire d'une tige de rotation, ou bien encore par des crochets cintrés, formant des crochets de maintien, disposés solidement sur le plateau et venant maintenir le support. Ces crochets sont de préférence au nombre d'au moins deux.

Avantageusement, pour la liaison pivotante entre le plateau fixe et le support mobile, un cylindre disposé au niveau des crochets cintrés permet d'assurer une fonction pivot relativement robuste.

Cette solution du cylindre est avantageuse du fait de sa simplicité et sa robustesse.

Pour soulever le support par rapport au plateau, un ou plusieurs moyen(s) élastiques(s), dit(s) également système de compression-décompression, est(sont) installé(s) entre le plateau et le support sur au moins un côté du dispositif différent du côté liant plateau et support, de préférence sur le côté de l'élément mobile opposé à l'axe de rotation.

Le moyen élastique peut par exemple comprendre un vérin pneumatique ou hydraulique.

Alternativement, le moyen élastique peut comprendre un ressort. Le ressort compressé peut avoir une longueur relativement faible, ce qui permet d'éviter une hauteur du moyen élastique trop importante pour la hauteur du dispositif.

De plus, le ressort peut avoir une durée de vie relativement longue, être relativement simple à fabriquer, relativement peu onéreux, et de maintenance relativement aisée.

L'invention n'est bien entendu pas limitée à l'emploi de vérins ou de ressorts.

Par exemple, au moins deux ressorts sont disposés entre l'élément fixe et l'élément mobile sur le côté de l'élément mobile opposé à l'axe de rotation.

Avantageusement, pour un meilleur équilibrage, deux ressorts identiques peuvent être disposés entre le plateau fixe et le support mobile, dans le prolongement du côté opposé au côté commun du plateau et du support.

Le support inférieur du ressort peut être directement lié, par l'intermédiaire d'une coupelle, au gousset du plateau fixe. Un tube peut être positionné au centre du ressort pour assurer le réglage de la butée du ressort à l'aide d'une goupille.

La partie supérieure du ressort peut être également disposée dans une coupelle, elle-même positionnée sur le support ressort installé sur le support mobile.

On peut avantageusement prévoir un moyen pour limiter le pivotement de l'élément mobile. Par exemple une clavette peut être disposée dans le tube central, pour limiter le basculement du support mobile par rapport au plateau fixe.

Quand le GRV plein est installé sur le support basculant, les deux ressorts sont compressés, l'angle d'ouverture entre les deux plateaux est proche de zéro degré.

Au fur et à mesure que le GRV se vide et notamment quand le poids du GRV et du produit contenu approche la centaine de kilogrammes par exemple, la force de réaction sur les ressorts devenant de plus en plus faible, les deux ressorts se détendent, font basculer le support mobile et bien évidemment le GRV, afin que le robinet d'évacuation soit au point le plus bas possible et que le produit chimique soit naturellement entraîné vers ce robinet.

La pente adoptée pour le support mobile peut être limitée à 5% grâce aux clavettes disposées sur les tubes centraux.

La quantité de produit restant dans le GRV peut alors être de l'ordre de 0,1% du volume total initial, soit généralement inférieure à un litre.

Le dispositif peut être apte à fonctionner parfaitement pour tout type de produit présentant une densité comprise entre 0,2 et 1,5 et de préférence entre 0,5 et 1,2.

De plus, la viscosité à 20 °C du produit peut être comprise entre 0,5 mpa.s et 45 mpa.s et avantageusement, entre 1 mpa.s et 40 mpa.s, et ce afin de permettre un bon écoulement. En effet, si la viscosité du produit à l'intérieur du GRV est supérieure à la limite haute ci-dessus, l'écoulement dudit produit par le robinet du GRV risque davantage d'être ralenti ou stoppé.

Une solution pour palier cet inconvénient, peut consister à mettre le GRV sous pression à l'aide d'un gaz neutre.

Bien évidemment, quand les deux ressorts sont détendus, le GRV adopte une position oblique, position qui devient un indicateur de vide visible pour l'opérateur en charge des réapprovisionnements des GRV. Ainsi, le dispositif permet d'apporter une indication visuelle à l'opérateur de l'imminence de cette vidange, et donc un signal indéniable pour le remplacement rapide du GRV vide par un plein.

Avantageusement, le support basculant présentant une interface de positionnement la plus universelle possible peut recevoir tout type de GRV, notamment que celui-ci soit de type 1 avec une palette de maintien en bois ou de type 2 avec une palette de maintien en matière plastique.

Quand le dispositif est incliné, par exemple d'une pente de 5% et donc que le GRV est en fin de vidange, la manutention du GRV, disposé sur un support conventionnel telle une palette fabriquée entièrement en bois, pour effectuer son dépôt puis son remplacement par un plein, peut être effectuée par l'intermédiaire d'un engin de levage disposant par exemple de fourches présentant une section 40 x 180 mm.

Il en est tout autrement si la section des fourches est plus grande, par exemple 60 x 180 mm, car les passages de fourches deviennent difficile dans la palette du fait de l'inclinaison du support mobile, donc du GRV et bien évidemment de son support.

Il est donc souhaitable d'adapter le dispositif pour que le GRV soit chargé et déchargé à plat, c'est-à-dire quand le support mobile n'est pas basculé.

On prévoit à cet effet au moins un moyen de compression manuelle du ou des moyens élastiques. Le moyen de compression manuelle comprend une ou des sauterelles. Les sauterelles permettrent d'amener manuellement le dispositif, et plus exactement le support mobile, en position horizontale ou sensiblement horizontale.

En effet, les sauterelles, installées face à chaque ressort et dont le but est la compression manuelle de ces ressorts, ont l'avantage de réduire la force de ces mêmes ressorts grâce à un bras de levier pour une grande facilité d'utilisation.

Avantageusement, des fixations à boulons peuvent permettre d'installer ou de démonter les sauterelles à la demande.

Les sauterelles peuvent comprendre des sauterelles à étrier.

L'utilisation de moyen(s) élastique(s), notamment de ressorts entre le plateau fixe et le support mobile, permet de faire basculer un GRV d'un angle de 5° par exemple, de façon simple, efficace et suffisamment robuste pour l'environnement dans lequel le dispositif est utilisé.

Cette solution permet, sans apport d'énergie extérieure, une manutention simple et une facilité d'utilisation. L'utilisation de ressorts est une garantie de solidité et de longue durée.

L'invention sera mieux comprise à la lecture de la description détaillée du dispositif en référence aux dessins, non limitatifs, dans lesquels :
- la figure 1 représente schématiquement un exemple de dispositif selon un mode de réalisation de la présente invention,
- la figure 2 est une vue de détail du plateau fixe du dispositif de la figure 1,
- La figure 3 représente une vue éclatée de la liaison pivot entre le plateau fixe et le support mobile du dispositif de la figure 1,
- la figure 4 est une vue relative à la disposition d'un ressort sur le plateau fixe du dispositif de la figure 1,
- la figure 5 montre le montage du ressort entre le plateau fixe et le support mobile, ainsi que la sauterelle pour la compression dudit ressort, sur le dispositif de la figure 1,
- la figure 6 montre des courbes représentant les quantités de litres d'eau vidés en fonction du temps pour différentes pentes maximales du support mobile, et
- la figure 7 montre des courbes représentant les quantités de litres vidés d'un GRV en fonction du temps pour l'eau et une huile de turbine pour une pente de 5 %.

Des références identiques peuvent être utilisées pour désigner des objets identiques ou similaires.

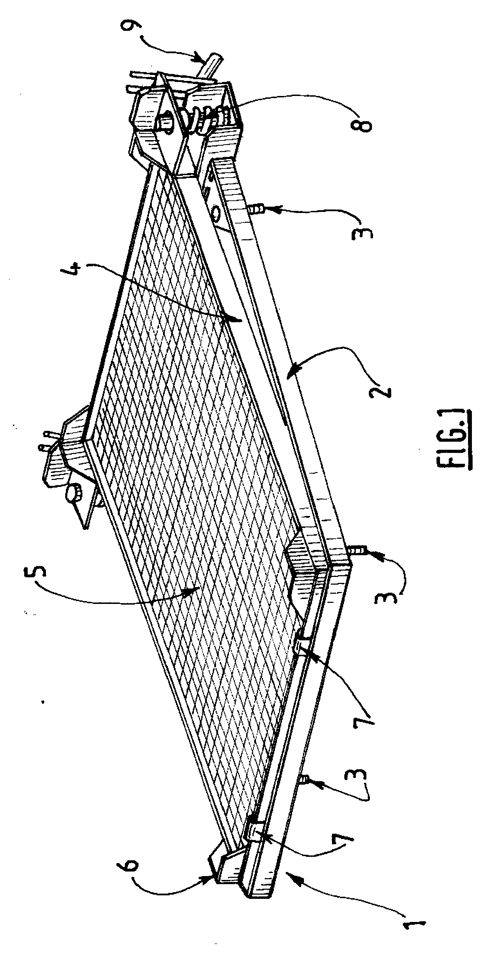

Le dispositif 1 représenté sur la figure 1 comprend :
- un élément fixe, ici un plateau fixe 2, réalisé en cornières 50.50.5 en acier galvanisé, sur lequel sont disposés aux quatre coins des éléments de réglages 3 (vis, tiges filetées,...) pour assurer un parfait positionnement, de préférence horizontal, sur un support non représenté,
- un élément mobile, ici un support mobile 4, comportant un caillebotis 5 installé sur son cadre, ces deux derniers éléments étant réalisés avec les mêmes matériaux que le plateau fixe 2. Le support mobile 4 s'emboîte dans le plateau fixe 2 et est relié à celui-ci par un côté commun. Le support mobile 4 est apte à recevoir un GRV sur le caillebotis 5,
- à chacun des angles du support mobile (4) est disposé un angle droit métallique de maintien 6 du GRV lorsque ce dernier est installé sur le caillebotis 5,
- au moins deux crochets 7 cintrés à 180° sur un rayon de 14 mm sont soudés sur un même côté du plateau fixe 2 et assurent le maintien du support mobile 4 dans le plateau fixe 2,
- sur le côté opposé à celui qui comporte les crochets 7 cintrés, deux ressorts 8 sont disposés entre le plateau fixe 2 et le support mobile 4,
- une sauterelle 9, installée entre le plateau fixe 2 et le support mobile 4 permet, par simple manoeuvre, la compression du ressort 8, et donc de ramener le support mobile 4 à l'horizontale ou sensiblement à l'horizontale.

Les ressorts, d'une hauteur totale de 19 cm et d'un diamètre de 9 cm sont fabriqués en acier ressort SH et meulés aux extrémités

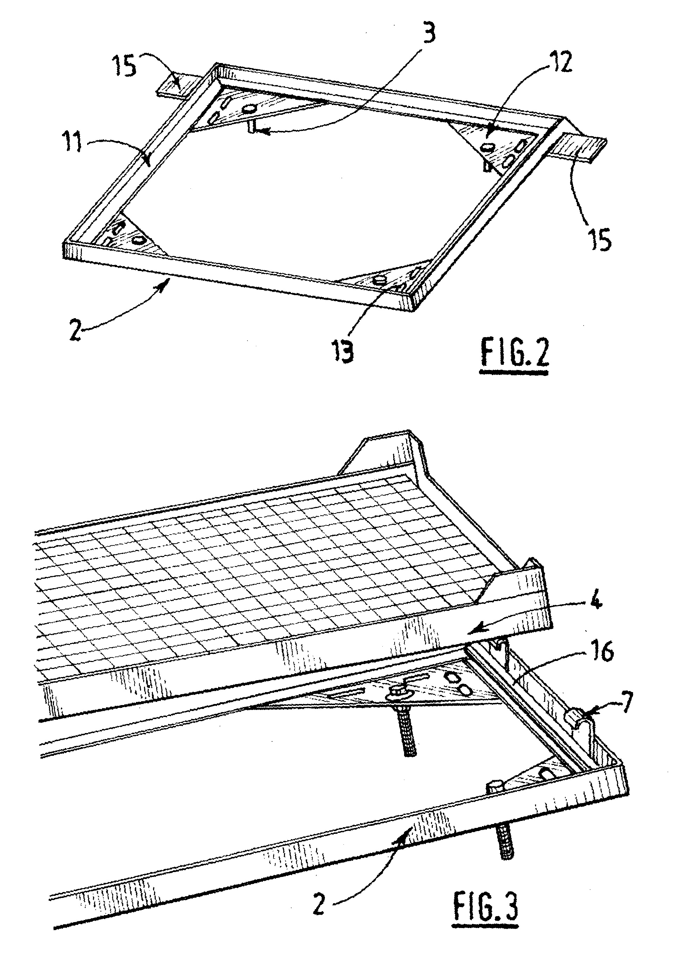

Le plateau fixe 2 est représenté en détails sur la figure 2.

Sur ce plateau 2, des goussets 12 sont installés et soudés aux quatre coins pour renforcer la structure en cornières.

Sur ces goussets 12, des trous oblongs 13 permettent une plus grande variété de fixations du plateau sur un support fixe et donc un meilleur réglage de la planéité, par exemple par l'intermédiaire des vis ou tiges filetées 3.

Les supports des ressorts 15 sont disposés de chaque côté du dispositif et dans le prolongement du côté opposé à celui assurant le basculement du support mobile 4 par rapport au plateau fixe 2.

La figure 3 montre une vue éclatée de la liaison pivot 16 entre le plateau fixe 2 et le support mobile 4.

Sur cette figure le support mobile 4 est éloigné du plateau fixe 2 afin de montrer la liaison pivot 16 permettant le basculement du support mobile 4 sur la partie fixe 2.

Cette liaison pivot 16 est constituée d'un rond en acier présentant un diamètre compris entre 10 et 20 mm et soudé sur le cadre du plateau fixe 2.

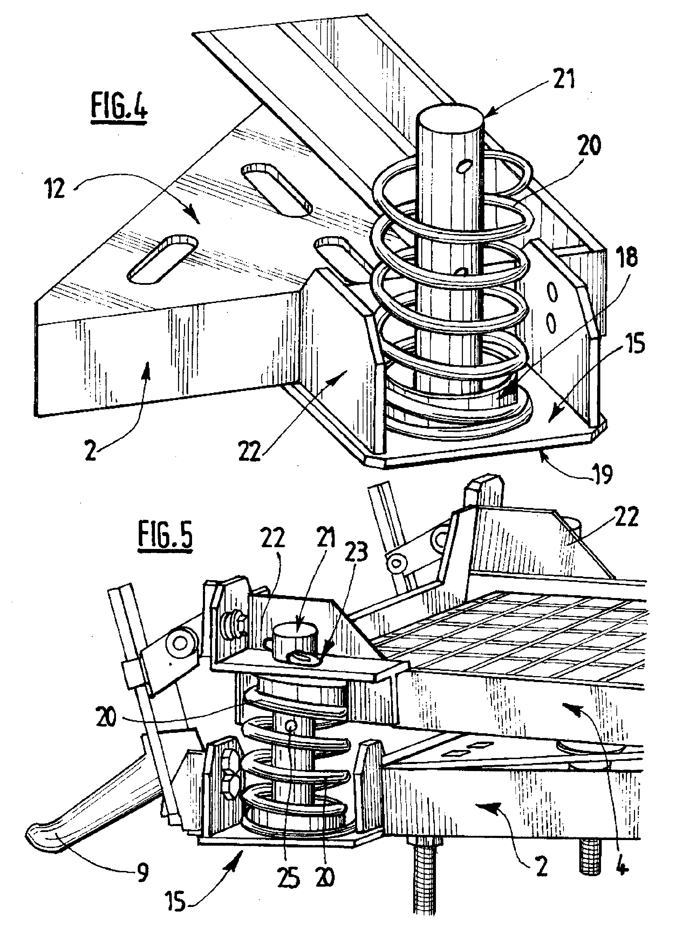

Sur la figure 4 est représenté en détails le support ressort 15 installé sur le cadre et à proximité d'un angle du plateau fixe 2.

Ce support ressort 15 est directement lié au gousset 12 du plateau fixe 2. Une coupelle 18 d'un diamètre de 70 mm est soudée sur la platine 19 pour maintenir le ressort 20 en position.

Un tube 21 est positionné au centre de la coupelle 18 pour le réglage de la butée du basculement à l'aide d'une goupille qui vient se positionner sur ce tube 21.

De nouveaux goussets 22 sont installés pour augmenter la résistance de la platine 19.

La figure 5 représente le ressort 20 décompressé et installé entre le plateau fixe 2 et le support mobile 4.

Une goupille 23, installée dans le tube 21 permet de limiter la décompression du ressort pour obtenir le pourcentage de pente désiré (par exemple 5%) du support mobile 4. Cette limite étant réalisée par la goupille 23 et par le support 22 installé sur le support mobile et venant se bloquer sur la goupille 23.

Une sauterelle démontable 9, installée sur les deux supports 15 et 22 du ressort, permet de repositionner manuellement, grâce à sa poignée mobile, le support mobile en position horizontale. L'avantage de ces sauterelles, de par leur conception, permet de réduire la force due au ressort grâce à un bras de levier procurant une grande facilité d'utilisation.

Après la compression de la sauterelle, et éventuellement avant le chargement du GRV sur le support mobile horizontal, ce dernier peut être immobilisé dans cette dernière position grâce à une autre goupille insérée dans le trou 25.

### Exemple

### Essai 1

Un GRV de type 1, c'est-à-dire reposant sur une palette en bois classique est disposé sur le dispositif objet de la présente invention.

Quatre essais successifs sont réalisés chacun avec 10 litres d'eau dans le GRV.

La pente maximale du dispositif est réglée, pour chacun de ces essais, manuellement et successivement à 8%, 5%, 3% puis 0%.

Le temps en secondes de vidage de l'eau, est mesuré pour chaque essai, donc pour chacune des pentes du dispositif.

Les résultats obtenus sont regroupés dans le tableau 1 ci-dessous

**Tableau 1 : Temps de vidage de l'eau d'un GRV en fonction de la pente**

| **Pentes maximales en %** | **Temps de vidage (s)** |
|---|---|
| 8 | 100 |
| 5 | 75 |
| 3 | 120 |
| 0 | > 400 |

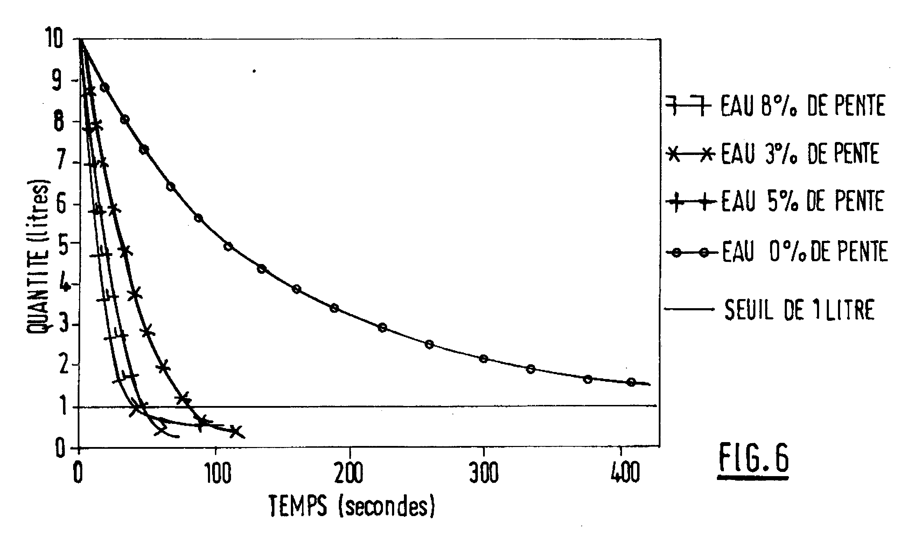

Les résultats détaillés de la quantité de litres vidés en fonction du temps sont indiqués plus précisément dans les courbes de la figure 6. Ces courbes représentent les quantités de litres d'eau vidés en fonction du temps pour différentes pentes maximales du support mobile.

On voit que le vidage du GRV des dix litres d'eau est effectif dans un temps variant de 75 à 120 secondes pour des pentes maximales du support mobile par rapport au plateau fixe du dispositif variant de 3% à 8%. Le meilleur résultat étant obtenu avec une pente de 5 %.

A contrario, quand la pente est égale à 0%, c'est-à-dire quand il n'y a pas de basculement du support mobile, c'est-à-dire encore quand il n'y a pas usage de l'invention, les dix litres d'eau ne sont pas vidés après un temps de 400 secondes et, de plus, la quantité restante dans le GRV est supérieure à un litre alors que cette quantité est inférieure à ce seuil pour les autres pentes.

Ce seuil de1 litre correspond, comme indiqué précédemment dans la présente description à la quantité minimale souhaitée, soit 0,1% des 1000 litres du GRV empli totalement.

### Essai 2

Avec une pente du support mobile positionnée à 5 %, deux produits ont été testés, l'eau qui servira de référence eu égard aux résultats obtenus précédemment et une huile de turbine.

L'eau présente une viscosité de 1 mPa.s, tandis que l'huile de turbine une viscosité de 40,5 mPa.s à 20°C.
Le tableau 2 regroupe les résultats obtenus.

**Tableau 2 : Temps de vidage de l'eau et de l'huile de turbine du GRV pour une pente de 5 %**

| **Produit** | **Temps de vidage (s)** |
|---|---|
| Eau | 80 |
| Huile de turbine | > 400 |

Ces résultats montrent qu'avec une pente de 5 %, le dispositif objet de la présente invention est opérationnel pour des viscosités variant d'un facteur 1 à 40.

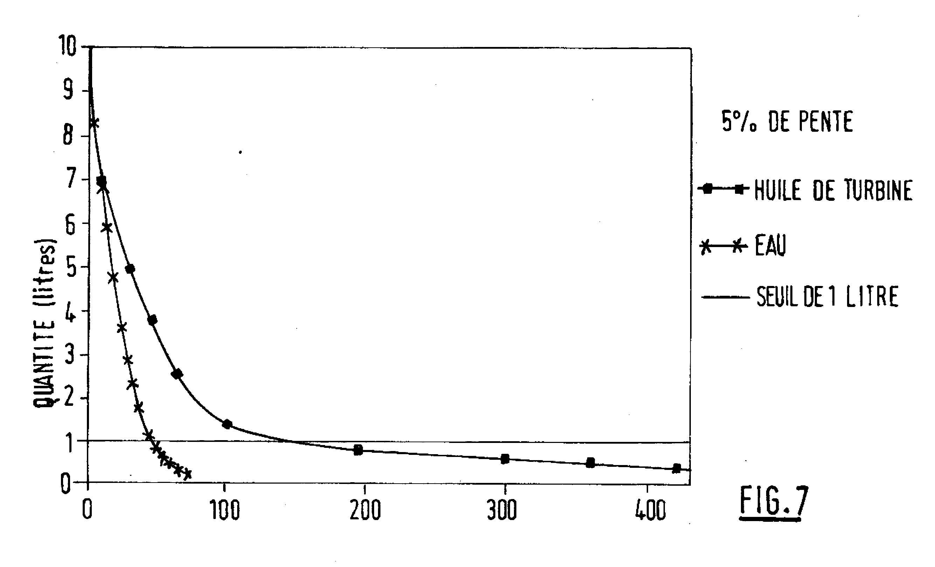

Comme précédemment, les quantités de produits vidés en fonction du temps sont indiquées dans les courbes représentées sur la figure 7. Ces courbes représentent les quantités de litres vidés d'un GRV en fonction du temps pour l'eau et une huile de turbine pour une pente de 5 %.

Le dispositif objet de la présente invention, permet ainsi de vider des produits liquides dont la viscosité à 20° C varie de 1 à 40 mPa.s.

Pour ces deux produits le seuil de produit restant dans le GRV est inférieur à un litre.

## Revendications

1. Dispositif support (1) d'un réservoir comprenant un robinet de vidange dans sa partie basse, ledit dispositif comprenant
- au moins un élément fixe (2) et un élément mobile (4) monté en rotation sur ledit élément fixe de façon à être apte à pivoter autour d'un axe de rotation, ledit élément mobile étant agencé pour recevoir le réservoir de sorte que le robinet de vidange soit disposé du même coté que l'axe de rotation,
- au moins un moyen élastique (8) apte à supporter au moins une partie du poids du réservoir et à appliquer une force de poussée de façon à faire pivoter l'élément mobile autour de l'axe de rotation lorsque le poids supporté passe en dessous d'un seuil,
**caracterisé en ce que** le dispositif support (1) comprend au moins un moyen de compression manuelle du moyen élastique, comprenant au moins une sauterelle (9).

2. Dispositif (1) selon la revendication 1, **caractérisé en ce que** le moyen élastique (8) comprend un vérin et/ou un ressort (20).

3. Dispositif (1) selon l'une des revendications 1 ou 2, **caractérisé en ce qu'**au moins deux ressorts (20) sont disposés entre l'élément fixe (2) et l'élément mobile (4) sur le côté de l'élément mobile opposé à l'axe de rotation.

4. Dispositif (1) selon l'une des revendications 1 à 3, **caractérisé en ce que** l'élément mobile (4) comprend un caillebotis (5).

5. Dispositif (1) selon l'une des revendications 1 à 4, comprenant au moyen (23) pour limiter le pivotement de l'élément mobile (4).

6. Dispositif (1) selon l'une des revendications 1 à 5, ledit dispositif étant réalisé en cornière de type L.

7. Dispositif (1), selon l'une des revendications 1 à 6, dans lequel l'élément fixe (2) comprend des moyens vis/écrou pour le réglage de la planéité dudit élément fixe.

8. Dispositif selon la revendication 7, dans lequel l'élément fixe comprend un plateau, et dans lequel ledit plateau comporte à au moins un de ses angles une équerre ou un gousset percé d'au moins un trou oblong.

9. Dispositif (1) selon l'une des revendications 1 à 8, dans lequel l'élément fixe (2) et l'élément mobile (4) sont montés en rotation par au moins deux crochets de maintien (7).

10. Dispositif (1) selon l'une des revendications 1 à 9, **caractérisé en ce que** l'élément mobile (4) comporte au moins un rebord (6) de maintien en translation du réservoir.

11. Dispositif (1) selon l'une des revendications 1 à 10, dans lequel l'élément mobile (4) et l'élément fixe (2) sont agencés pour pouvoir s'emboîter l'un dans l'autre.

## Patentansprüche

1. Stützvorrichtung (1) für einen Behälter, der in seinem unteren Abschnitt einen Abflusshahn aufweist, wobei die Vorrichtung enthält:
zumindest ein festes Element (2) und ein bewegliches Element (4), das drehbar so an dem festen Element angebracht ist, dass es in der Lage ist, um eine Drehachse zu schwenken, wobei das bewegliches Element eingerichtet ist zum Aufnehmen des Behälters dergestalt, dass der der Abflusshahn auf derselben Seite angeordnet ist wie die Drehachse,
zumindest ein elastisches Element (8), das in der Lage ist, zumindest einen Teil des Gewichts des Behälters zu tragen und eine Schubkraft aufzubringen zum Schwenken des drehbaren Elements um die Drehachse, wenn das gehaltene Gewicht unter eine Schwelle fällt,
**dadurch gekennzeichnet, dass**
die Vorrichtung zumindest ein manuelles Kompressionselement für das elastische Element enthält, das zumindest einen Spannbügel (9) enthält.

2. Vorrichtung (1) gemäß Anspruch 1, **dadurch gekennzeichnet, dass** das elastische Element (8) eine Spindel und/oder eine Feder (20) enthält.

3. Vorrichtung (1) gemäß Anspruch 1 oder 2, **dadurch gekennzeichnet, dass** zumindest zwei Federn (20) auf der Seite des beweglichen Elements, die der Drehachse gegenüberliegt, zwischen dem festen Element (2) und dem beweglichen Element (4) angeordnet sind.

4. Vorrichtung (1) gemäß einem der Ansprüche 1 bis 3, **dadurch gekennzeichnet, dass** das bewegliche Element (4) ein Gitter (5) enthält.

5. Vorrichtung (1) gemäß einem der Ansprüche 1 bis 4, die ein Mittel (23) zum Begrenzen des Schwenkens des beweglichen Elements (4) enthält.

6. Vorrichtung (1) gemäß einem der Ansprüche 1 bis 5, bei der die Vorrichtung aus einem Winkelprofil vom L-Typ verwirklicht ist.

7. Vorrichtung (1) gemäß einem der Ansprüche 1 bis 6, bei der das feste Element (2) ein Schraube/Mutter-Element enthält zum Einstellen der Ebenheit des festen Elements.

8. Vorrichtung gemäß Anspruch 7,
bei der das feste Element ein Plateau enthält und
bei der das Plateau in zumindest einer seiner Ecken einen Montagewinkel oder einen Zwickel enthält, der von zumindest einem Langloch durchdrungen ist.

9. Vorrichtung (1) gemäß einem der Ansprüche 1 bis 8, bei der das feste Element (2) und das bewegliche Element (4) über zumindest zwei Haltehaken (7) drehbar verbunden sind.

10. Vorrichtung (1) gemäß einem der Ansprüche 1 bis 9, **dadurch gekennzeichnet, dass** das bewegliche Element (4) zumindest einen Halterand (6) für eine Translation des Behälters enthält.

11. Vorrichtung (1) gemäß einem der Ansprüche 1 bis 10, bei der das bewegliche Element (4) und das feste Element (2) so ausgebildet sind, dass sie ineinander gefügt werden können.

## Claims

1. Device (1) for supporting a container comprising a drain valve in its bottom part, the said device comprising
- at least one fixed element (2) and one mobile element (4) which is mounted so that it can rotate on the said fixed element so that it can pivot about an axis of rotation, the said mobile element being designed to accept the container in such a way that the drain valve is positioned on the same side as the axis of rotation,
- at least one elastic means (8) able to support at least part of the weight of the container and apply a thrusting force so as to cause the mobile element to pivot about the axis of rotation when the weight supported drops below a threshold,
**characterized in that** the support device (1) comprises at least one manual-compression means for compressing the elastic means by hand and comprising at least one quick-release cleat (9).

2. Device (1) according to Claim 1, **characterized in that** the elastic means (8) comprises a cylinder actuator and/or a spring (20).

3. Device (1) according to one of Claims 1 and 2, **characterized in that** at least two springs (20) are arranged between the fixed element (2) and the mobile element (4) on the opposite side of the mobile element to the axis of rotation.

4. Device (1) according to one of Claims 1 to 3, **characterized in that** the mobile element (4) comprises a grating (5).

5. Device (1) according to one of Claims 1 to 4, comprising a means (23) for limiting the pivoting of the mobile element (4).

6. Device (1) according to one of Claims 1 to 5, the said device being produced in the form of an L-shaped bracket.

7. Device (1) according to one of Claims 1 to 6, in which the fixed element (2) comprises screw/nut means for adjusting the flatness of the said fixed element.

8. Device according to Claim 7, in which the fixed element comprises a platform, and in which the said platform comprises, at one of its corners at least, a corner plate or a gusset piece that is pierced with at least one oblong hole.

9. Device (1) according to one of Claims 1 to 8, in which the fixed element (2) and the mobile element (4) are mounted for the purposes of rotation by at least two retaining hooks (7).

10. Device (1) according to one of Claims 1 to 9, **characterized in that** the mobile element (4) comprises at least one rim (6) to retain the container against translational movement.

11. Device (1) according to one of Claims 1 to 10, in which the mobile element (4) and the fixed element (2) are arranged to be able to nest one inside the other.
